(19) Europäisches Patentamt
European Patent Office
Office européen des brevets

(11) **EP 3 996 232 A1**

(12) **EUROPEAN PATENT APPLICATION**

(43) Date of publication:
**11.05.2022 Bulletin 2022/19**

(21) Application number: **20206026.5**

(22) Date of filing: **05.11.2020**

(51) International Patent Classification (IPC):
**H02J 3/46** *(2006.01)* **G06F 1/26** *(2006.01)*

(52) Cooperative Patent Classification (CPC):
**H02J 3/472; G06F 1/26**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JT International S.A.**
**1202 Geneva (CH)**

(72) Inventors:
• **ADAIR, Kyle Robert**
**Lisburn County Antrim BT28 2UW (GB)**
• **POPOOLA, Olayiwola Olamiposi**
**Walton-on-Thames KT12 2SJ (GB)**
• **LOVEDAY, Peter**
**Woking, Surrey GU24 9PW (GB)**

(74) Representative: **Santarelli**
**49, avenue des Champs-Elysées**
**75008 Paris (FR)**

(54) **AN AEROSOL GENERATING DEVICE COMPRISING A VOLTAGE REGULATOR**

(57) An aerosol generating device comprising a battery pack (2), several electrical components (3) and at least one voltage regulator (4), said battery pack (2) supplying power to said electrical components (3). A voltage regulator (4) is directly mounted between at least one of said electrical components (3) and the battery pack (2).

Fig. 1

## Description

## Field of the invention

The present invention relates to an aerosol generating device, also commonly called a vaporizer or electronic cigarette.

## Background of the invention

An aerosol generating device allows vaporization of a product or consumable, generally a liquid, often called e-liquid or e-juice. Said product is heated to a temperature at which volatile compounds are released to form an aerosol that can be inhaled.

The aerosol generating devices generally comprises a battery pack, and several electrical components such as a user interface, a processing core or a heating element.

The battery pack enables the electrical power supply to the electrical components. This system is satisfactory as long as the battery pack and the electrical components function correctly. However, if the battery pack or one of the electrical components presents a fault or anomaly, it usually affects the entire aerosol generating device. Thus, a single fault leaves the entire device non-functional.

Therefore, the present invention aims at providing an aerosol generating device in which the electrical components are protected against a general failure due to a single dysfunction.

## Summary of the invention

The present invention thus relates to an aerosol generating device comprising a battery pack, several electrical components and at least one voltage regulator, said battery pack supplying electrical power to said electrical components.

According to the invention, a voltage regulator is directly mounted between at least one of said electrical components and the battery pack.

Such a configuration is particularly advantageous. The voltage regulator placed between the battery pack and an electrical component receives an input voltage from the battery pack and provides an output voltage supplied to said electrical component. The voltage regulator enables the regulation of the output voltage.

By providing such a regulation, it is possible to limit the risk of general failure in the aerosol generating device. Indeed, if a fault occurs in the battery pack, it will not affect said electrical component. If a fault occurs in said electrical component, it will only affect the latter but not the other electrical components and the battery pack.

Such a configuration is particularly interesting for the electrical components that need to be protected because of their cost or weakness. Therefore, depending on the nature of the electrical component, one can decide to mount a voltage regulator or not.

According to one embodiment, a voltage regulator is mounted between each of the electrical components and the battery pack.

Such a configuration implement subsystems in the aerosol generating device, a subsystem being composed of the battery pack, a voltage regulator and an electronic component. Thanks to this configuration, it is possible to localize a fault when it occurs. In fact, if the fault occurs in the battery pack, no electrical component will be affected. And, if the fault occurs in one of the electrical components, it will only affect said electrical component. The rest of the aerosol generating device can thus continue to function normally. In other words, the fault will only need to be dealt with in one subsystem.

Such a configuration facilitates the identification of faults as well as the maintenance and reparation of the device. This solution is thus more reliable, provides better safety and power management in the aerosol generating device than in prior art.

According to one embodiment, the regulators are linear voltage regulators, preferably Low-Dropout regulators.

Low-dropout regulators (LDO) provide power regulation as well as a protection of the battery pack and electrical components of the aerosol generating device. A LDO regulator presents the advantage of being able to regulate the output voltage even when the supply voltage is very close to the output voltage.

According to one embodiment, the Low-dropout regulators have a low quiescent current, preferably inferior to $50\mu A$.

A low quiescent current provides less power dissipation, in particular during stand-by mode of the aerosol generating device.

According to one embodiment, the Low-dropout regulators have a high power supply rejection ratio, preferably at least equal to 50dB at a frequency ranging between 1kHz and 100kHz, and at least equal to 20dB at a frequency superior to 1MHz.

This provides a better isolation as it suppresses noise and ripples of the input signal coming from the battery pack and provides thus a smooth output signal for supply to the electrical component.

## Brief description of the drawings

Other particularities and advantages of the invention will also emerge from the following description.

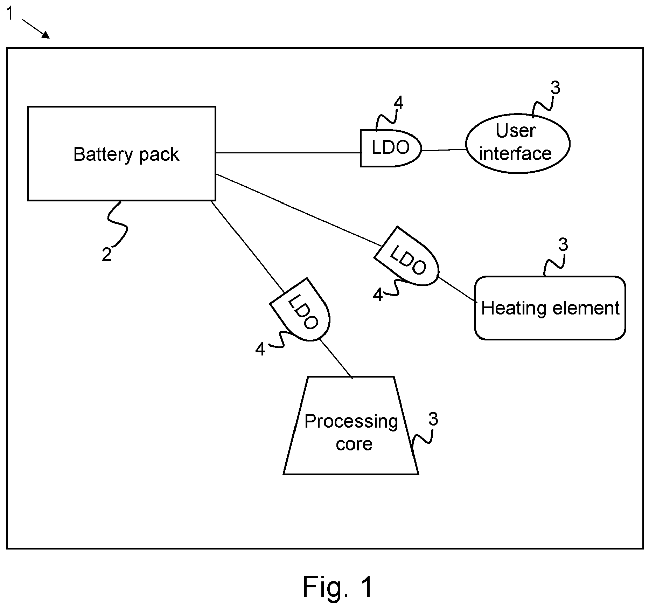

In the accompanying drawing, given by way of non-limiting example, figure 1 represents in a schematic diagram an aerosol generating device according to an embodiment of the invention.

## Detailed Description

Figure 1 represents schematically an electrical assembly of components of an aerosol generating device 1 according to one embodiment of the invention.

An aerosol generating device usually comprises a battery pack 2 useful for power supply, and other functional electrical components 3. The battery pack 2 supplies power to said functional electrical components 3.

A functional electrical component 3 can be any component useful in an aerosol generating device, such as a user interface, a processing core or a heating element. Such components are commonly known and used and will not be described further.

The aerosol generating device according to the invention comprises at least one voltage regulator 4. The voltage regulator 4 is mounted between at least one of said electrical components 3 and the battery pack 2.

The voltage regulator 4 is adapted to ensure a steady voltage. In particular, starting from an input voltage Vin supplied by the battery pack 2, it enables adjusting and maintenance of a constant output voltage Vout that is supplied to the electrical component 3 to which it is mounted.

This configuration provides protection of the electrical component 3 from any fault that can occur as said electrical component 3 is isolated from the rest of the components thanks to the use of the voltage regulator 4.

In the represented embodiment, a voltage regulator 4 is mounted between each of the electrical components 3 and the battery pack 2.

Providing one voltage regulator 4 between each electrical component 3 and the battery pack 2 enables the division into multiple subsystems, each of which comprising an electrical component 3, the battery pack 2 and a voltage regulator 4.

In this configuration, if a fault occurs in an electrical component 3, it is possible to isolate the concerned subsystem without affecting the other subsystems. If a fault occurs in the battery pack 2, the electrical components 3 are protected due to the presence of the voltage regulators 4.

The voltage regulators 4 can be linear voltage regulators.

Preferably, the voltage regulators 4 are Low-Dropout regulators (LDO). A LDO regulator is a DC linear voltage regulator that presents the advantage of being able to regulate the output voltage Vout even when the input voltage Vin is very close to the output voltage Vout. Indeed, a LDO regulator can provide a constant output voltage regardless of the input voltage, whilst other types of regulators usually need a high input voltage. The output voltage can be limited to a required voltage and a maximum preset value. The maximum preset value is for example 6V.

Not only does a LDO regulator provide a voltage regulation, but it also provides noise isolation. Indeed, a LDO regulator is able to suppress noise and ripples of the input voltage supplied by the battery pack 2 to provide a smother output voltage for the electrical component 3.

A LDO regulator is defined by some parameters which determine its efficiency, among which quiescent current and power supply rejection ratio.

A first parameter that influences the efficiency of the LDO regulator is quiescent current IQ. Quiescent current is the current drawn by a system in standby mode with light or no load. In other words, the quiescent current is required to power the LDO's internal circuitry when the external load current is zero or near zero.

The quiescent current presents an interest in the study of power dissipation. The power dissipated in an LDO is expressed by the following equation: PD = (*Vin - Vout*) * *Iout* + *Vin * IQ*, wherein IQ is the quiescent current and Iout the output current.

Power is dissipated through the LDO regulator when the aerosol generating device 1 is active as well as when it is in stand-by mode. One objective can thus be to lower this dissipation of power, in particular in stand-by mode. Indeed, power dissipation in stand-by mode is particularly not good for aerosol generating devices that spend majority of their time in stand-by or shutdown mode.

The above equation of power dissipation can be divided into two parts; a first part (*Vin - Vout*) * *Iout* and a second part *Vin * IQ.* During stand-by mode, Iout drops, which makes the first part of the equation drop. On the contrary, the second part of the equation remains constant.

Therefore, the quiescent current IQ has a significant influence in power dissipation in stand-by mode. It is then preferable to select a LDO regulator having a low quiescent current. Preferably, the LDO has a quiescent current inferior to 100μA.

A second parameter that influences the efficiency of the LDO regulator is power supply rejection ratio, or PSRR. PSRR is a measure of how well a circuit suppresses extraneous signals on the power supply input to keep them from corrupting the output. Extraneous signals shall mean noises and ripple.

In other words, PSRR is the degree to which an AC element, usually a voltage, generated from a switch mode power supply of a certain frequency, is attenuated from the input to the output of the LDO regulator. In other words, it determines how much noise couples from the input into the output. PSRR can be expressed as (in dB):

$$PSRR = 20 * \log(\frac{VEin}{VEout}),$$ where VEin and VEout are the extraneous signals appearing at the input and output, respectively.

The equation of PSRR shows that the higher the attenuation, the higher the PSRR value is in decibels. In order to improve the efficiency of the LDO regulator, PSRR shall thus be increased.

Preferably PSRR is at least equal to 50dB at a frequency ranging between 1kHz and 100kHz, and at least equal to 20dB at a frequency superior to 1MHz.

The invention proposes thus a more reliable aerosol generating device in which a fault in one component or the battery pack cannot cause a general failure. Damage is limited and debug is eased as it is possible to isolate the fault if there is any.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

As the noise or oscillation frequency on the voltage line increases from kHz to MHz, there is a reduction in the PSSR of the LDO. However, it is possible to improve PSRR at the higher frequencies by adjusting the output capacitor. For example, by increasing the capacitance of the output capacitor, it increases the PSRR despite the higher frequency of the noise or oscillation.

**Claims**

1. An aerosol generating device comprising a battery pack (2), several electrical components (3) and at least one voltage regulator (4), said battery pack (2) supplying power to said electrical components (3), **characterized in that** a voltage regulator (4) is directly mounted between at least one of said electrical components (3) and the battery pack (2).

2. The aerosol generating device according to claim 1 wherein a voltage regulator (4) is mounted between each of the electrical components (3) and the battery pack (2).

3. The aerosol generating device according to any one of claims 1 or 2, wherein said regulators (4) are linear voltage regulators, preferably Low-Dropout regulators.

4. The aerosol generating device according to claim 3, wherein the Low-dropout regulators have a low quiescent current (IQ), preferably inferior to $50\mu A$.

5. The aerosol generating device according to any one of claims 3 or 4, wherein the Low-dropout regulators have a high power supply rejection ratio, preferably at least equal to 50dB at a frequency ranging between 1kHz and 100kHz, and at least equal to 20dB at a frequency superior to 1MHz.

Fig. 1

Europäisches
Patentamt

European
Patent Office

Office européen
des brevets

**EUROPEAN SEARCH REPORT**

Application Number

EP 20 20 6026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 524 508 B2 (RAI STRATEGIC HOLDINGS INC [US]) 7 January 2020 (2020-01-07) * column 21, lines 1-11; figure 12 * ----- | 1-5 | INV. H02J3/46 G06F1/26 |
| X | US 2019/350257 A1 (SUR RAJESH [US]) 21 November 2019 (2019-11-21) * paragraph [0116] - paragraph [0122]; figure 7 * ----- | 1-5 | |
| X | US 2019/387795 A1 (FISHER JOSEPH R [US] ET AL) 26 December 2019 (2019-12-26) * paragraph [0041]; figure 3 * ----- | 1-5 | |

| | | | TECHNICAL FIELDS SEARCHED (IPC) |
|---|---|---|---|
| | | | H02J G06F A24F |

The present search report has been drawn up for all claims

| Place of search | Date of completion of the search | Examiner |
|---|---|---|
| Munich | 16 April 2021 | Lindquist, Jim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 6026

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2021

| Patent document cited in search report | | Publication date | Patent family member(s) | | Publication date |
|---|---|---|---|---|---|
| US 10524508 | B2 | 07-01-2020 | AU | 2017362059 A1 | 06-06-2019 |
| | | | BR | 112019009676 A2 | 06-08-2019 |
| | | | CA | 3043290 A1 | 24-05-2018 |
| | | | CL | 2019001302 A1 | 27-09-2019 |
| | | | CN | 109952039 A | 28-06-2019 |
| | | | EP | 3541212 A1 | 25-09-2019 |
| | | | JP | 2020507307 A | 12-03-2020 |
| | | | KR | 20190077566 A | 03-07-2019 |
| | | | PH | 12019501044 A1 | 19-08-2019 |
| | | | RU | 2019113798 A | 17-12-2020 |
| | | | US | 2018132531 A1 | 17-05-2018 |
| | | | US | 2020288783 A1 | 17-09-2020 |
| | | | WO | 2018092040 A1 | 24-05-2018 |
| US 2019350257 | A1 | 21-11-2019 | AU | 2019270613 A1 | 24-12-2020 |
| | | | BR | 112020023317 A2 | 02-02-2021 |
| | | | CA | 3100292 A1 | 21-11-2019 |
| | | | CN | 112423612 A | 26-02-2021 |
| | | | EP | 3809892 A1 | 28-04-2021 |
| | | | KR | 20210008870 A | 25-01-2021 |
| | | | US | 2019350257 A1 | 21-11-2019 |
| | | | WO | 2019220343 A1 | 21-11-2019 |
| US 2019387795 | A1 | 26-12-2019 | CA | 3104827 A1 | 02-01-2020 |
| | | | CN | 110632960 A | 31-12-2019 |
| | | | CN | 211123806 U | 28-07-2020 |
| | | | EP | 3809894 A1 | 28-04-2021 |
| | | | KR | 20210024496 A | 05-03-2021 |
| | | | SG | 11202012927Q A | 28-01-2021 |
| | | | TW | 202017275 A | 01-05-2020 |
| | | | US | 2019387795 A1 | 26-12-2019 |
| | | | WO | 2020005956 A1 | 02-01-2020 |

EPO FORM P0459

For more details about this annex : see Official Journal of the European Patent Office, No. 12/82